# EUROPEAN PATENT SPECIFICATION

(11) **EP 3 877 167 B1**
(45) Date of publication and mention of the grant of the patent: **15.03.2023**
(21) Application number: 19795687.3
(22) Date of filing: 28.10.2019
(51) Int. Cl.: B29D 99/00, B29C 70/08, B29C 43/18, B29C 51/00, B29C 51/10, B29C 51/26, B29C 51/36, B29C 51/44, B29K 75/00, B29K 105/06

(54) **PRODUCTION PROCESS OF A COMPOSIT PRODUCT**
VERFAHREN ZUR HERSTELLUNG EINES VERBUNDWERKSTOFFES
PROCÉDÉ DE PRODUCTION D'UN PRODUIT COMPOSITE

(30) Priority: 09.11.2018 IT 201800010223
(43) Date of publication of application: 15.09.2021
(73) Proprietor: Persico S.p.A., 24027 Nembro (BG) (IT)
(72) Inventor: GASTALDI, Sergio Battista, 24027 Nembro (BG) (IT)
(74) Representative: Tirloni, Bartolomeo
(86) International application number: PCT/IT2019/050230
(87) International publication number: WO 2020/095336

(56) References cited:
- EP-A1- 0 251 267
- US-A1- 2018 162 039

## Description

### Technical field of the invention

The present invention relates to a production process of a composite product.

### State of the art

It is known realizing composite products, such as typically sandwich panels, comprising a core, typically of honeycomb cardboard or of solid foams, and an upper layer and a lower layer, with reduced thickness, arranged at opposite faces of the core. Each layer is composed of a fiberglass sheet impregnated with a polyurethane material which also partially penetrates the core, to fix the whole.

The so composed structure has a considerably better static behaviour than the individual parts from which it is made. The lower and upper layers perform the function of distributing the loads in the plane, while the core, which occupies almost the whole thickness, performs the function of increasing the flexural and torsional stiffness of the panel, which depends on the distance of the layers from the middle plane, all the above with a reduced overall weight.

Such composite panels are widely used, for example for sports equipment such as skis or snowboards, or in the automotive sector, for example to make load planes, hat boxes, box bottoms, etc.

For the realization of the sandwich panels typically a panel semi-finished product is first made by assembling the core and the two fiberglass sheets, and by spraying the sheets to impregnate them with a liquid mixture precursor of the polyurethane material (e.g. a mixture of polyol and isocyanate). The semi-finished product is then subjected to a hot compression molding process (for example at 130-140°C in the case of polyurethane), in which it is used a mould consisting of two half-moulds which are pushed against each other with the interposition of the semi-finished product. In this way the semi-finished product is formed, by conformation of the surfaces and cutting of its contour, and furthermore the liquid mixture crosslinks to make the solid polyurethane material which fixes the final form of the sandwich panel. US2018162039A1 and EP0251267A1 each discloses a production process of a composite product. More specifically US2018162039A1 discloses a production process of a composite product, the composite product comprising a core at least a first layer at a first face of the core, the first layer comprising a sheet impregnated with a solid material, and a polymer based film applied to said first layer at the opposite side with respect to said first face of the core. The process comprises:
- producing a semi-finished product comprising said core and, at the first face of said core, said sheet impregnated by a precursor of said material;
- providing a mould comprising two half-moulds each having respective shaping surfaces;
- adhering said film to said shaping surface of a first of said two half-moulds by applying a depression between said film and said shaping surface;
- forming the semi-finished product by pressing said two half-moulds against each other with said semi-finished product interposed between the two shaping surfaces, so that said film comes into contact with the precursor which impregnates said sheet at the first layer;
- with the semi-finished product in the mould, thermosetting said precursor so that said film firmly adheres to said first layer and thus producing a composite product.

### Summary of the invention

The Applicant has realized that the known production processes of the composite products, and the related known composite products, have some drawbacks and/or can be improved in one or more aspects.

The Applicant has firstly found that it is desirable to equip the aforesaid composite products with at least one external surface treated to give particular properties to the surface itself, such as for example one or more among: improved mechanical properties (e.g. anti-scratch, anti-wear, etc.), water-tightness and wash-ability properties, tactile properties, aesthetic properties (e.g. colours, decorations, textures, etc.), anti-UV properties.

The Applicant has also realized that it is possible to make the aforesaid treated surface by coating of the surface with a suitable thin film. However the Applicant has ascertained that the application of the film to the aforesaid composite products downstream of the aforesaid moulding process, for example by lamination or gluing or thermoforming, involves an increase of the times and/or costs of production of the finished composite product and/or it does not guarantee the desired quality of the finished product, in terms for example of adhesion of the film or uniformity of spreading ('smoothness') of the film (i.e. absence of folds or wrinkles).

The Applicant has therefore faced the problem of developing a production process of a composite product comprising at least one surface coated with a thin polymer-based film, which entails limited times and/or costs, typically substantially comparable to the times and/or costs of the traditional processes, while guaranteeing the desired quality in terms of spreading uniformity and/or sturdiness and/or duration of the coating of the surface of the composite product.

According to the Applicant the problem of realizing one or more of these objects is solved by a production process of a composite product according to the attached claims.

According to an aspect the invention relates to a production process of a composite product according to claim 1.

With the expression depression between said film and said shaping surface it is meant a pressure lower than the atmospheric pressure made in the space delimited by the film and by the shaping surface (in order to make them mutually adhere) or more in general the realization of a pressure difference between the face of the film facing toward the shaping surface and the opposite face.

With the term film it is meant a sheet with sufficient flexibility to be able to be shaped to adhere to the surface of the half-mould by means of a moderate depression, for example greater than 0.1 bar. For example, depending on the selected polymeric material, the sheet typically has a thickness not greater than 1 mm.

According to the Applicant the adhesion of the film to the first half-mould by means of a depression and the thermosetting of the liquid mixture with the film in contact with the liquid mixture which impregnates the sheet, allows the inclusion of the film into the composite product directly during the molding step of the semi-finished product (comprising at least the forming and the thermosetting), without using any fixing means (e.g. adhesive) or process step (e.g. thermoforming, rolling, etc.) further to the traditional process described above.

The present invention achieves an intimate, resistant and durable adhesion of the film to the first layer. The use of the depression causes the film to be spread evenly, i.e. substantially without folds or wrinkles, thanks to the depression's ability to tension even very thin films (e.g. having thickness less than 250µm) and very flexible, which otherwise would tend to wrinkle.

The present invention in one or more of the aforesaid aspects can have one or more of the following preferred features.

Typically said composite product (when finished) comprises a second layer at a second face of the core opposite to the first face of the core, the second layer comprising a further sheet impregnated with said polyurethane solid material, and wherein said semi-finished product comprises, at the second face of the core, said further sheet impregnated with said liquid mixture precursor of said polyurethane solid material. In this way the mechanical resistance of the product is enhanced.

In an embodiment said composite product (when finished) comprises a further polymer-based film (preferably equal to said film) applied to said second layer at the opposite side with respect to said second face of the core.

Preferably the process comprises:
- adhering said further film to said shaping surface of a second of said two half-moulds by applying a depression between said further film and said shaping surface of the second half-mould;
- during said forming the semi-finished product, said further film comes into contact with the liquid mixture which impregnates said further sheet;
- during said thermosetting said liquid mixture, said further film firmly adheres to said second layer.

Preferably said core and/or said first and/or second layer have substantially laminar development.

Preferably said sheet is made of fiberglass, carbon or kevlar, or natural fibres, more preferably fiberglass (advantageously cheap).

Preferably said core comprises (or consists of) a honeycomb cardboard or a solid foam (with open or close cells), more preferably a honeycomb cardboard having cells with perpendicular development to said first face of the core (to give rigidity and sturdiness). Preferably said polyurethane material is based on diphenylmethane diisocyanate (MDI), even more preferably 4,4'-diphenylmethane diisocyanate (4.4'-MDI). Preferably said liquid mixture is a mixture of polyol and isocyanate, more preferably MDI, even more preferably 4,4'-MDI (due to its wide availability and affordability).

Preferably producing said semi-finished product comprises spraying said sheet (and said further sheet) with said liquid mixture.

Preferably said first (and/or second) half-mould comprises/comprise a respective body having said shaping surface and a cutting blade system.

Preferably forming the semi-finished product comprises cutting said semi-finished product at least along a contour line, more preferably by means of said blade system. Preferably thermosetting the liquid mixture comprises keeping the semi-finished product inside the mould at a given temperature, more preferably greater than 120°, even more preferably greater than 130°, for a given time interval.

Preferably said depression is greater than or equal to 0.1 bar and/or less than or equal to 0.9 bar.

Preferably said film (and said further film) has a thickness greater than or equal to 10 µm, more preferably greater than or equal to 20 µm, even more preferably greater than or equal to 30 µm and/or less than or equal to 500 µm, more preferably less than or equal to 250 µm, even more preferably less than or equal to 200 µm or 150 µm. This thickness is sufficient to give to the surface at least one of the aforementioned properties, without substantially increasing the weight and/or the thickness and/or the total cost of the composite product. Furthermore, the film is sufficiently flexible to be able to be shaped by a moderate depression.

Preferably said film (and said further film) contains or it is (substantially) composed of one or more of the following polymers: polypropylene (PP), polyethylene (PE), polyamide (PA), polystyrene (PS), polymethyl methacrylate (PMMA), polycarbonate (PC), acrylonitrile butadiene styrene (ABS). According to the Applicant these polymers are suitable, in varying degrees, to give to the surface at least one of the aforementioned properties, and/or they offer sufficient chemical/physical compatibility to bond with said polyurethane material.

Preferably at least one face of said film in contact with said outer face of the first layer (and possibly a face of said further film in contact with said outer face of said second layer) is made of polyamide or polystyrene or polymethyl methacrylate or polycarbonate or acrylonitrile butadiene styrene, more preferably of polyamide. In fact, the Applicant has verified that these polymers, in particular the polyamide, offer high chemical/physical compatibility (and thus stable and durable adhesion) with said polyurethane material.

Preferably said film (and said further film) contains an anti-UV filler and/or a pigment. In this way the finished product is protected from the harmful effects of UV rays and/or has a desired aesthetic appearance.

Preferably adhering said polymeric film (and said further film) to said (respective) shaping surface comprises:
- applying said film (and said further film) on said first (and respectively second) half-mould, wherein said film (and further film) has a (continuous) perimetral portion that exceeds said shaping surface along a whole perimeter of the shaping surface;
- applying a depression between said perimetral portion of said film and said first half-mould (and between said perimetral portion of said further film and said second half-mould), more preferably along a continuous line surrounding the respective shaping surface;
- after the previous step, applying said depression between said film and said shaping surface (and between said further film and said respective shaping surface), more preferably keeping said depression between said perimetral portion of said film and said first half-mould (and between said perimetral portion of said further film and said second half-mould).

The Applicant has ascertained that the application of a first out-of-shape depression makes a pre-tensioning of the film which favours the desired spreading (e.g. low presence, or absence, of wrinkles or folds) between the film and the shaping surface after the application of the second in-shape depression.

Preferably applying said film on said first half-mould comprises:
- applying said film to a frame and applying a depression between film and frame along a continuous perimetral portion of said film, to couple the film to the frame (and pre-tension the film);
- subsequently applying said film on said first half-mould by approaching the frame to the first half-mould,
- subsequently applying said depression between said perimetral portion of said film and said first half-mould,
- subsequently removing said depression between film and frame, to be able to remove said frame from said first half-mould. Similarly, for the further film.

In this way the film can be moved and rested on the half-mould already pre-tensioned, further improving the quality of the adhesion with the shaping surface.

### Brief description of the drawings

The characteristics and advantages of the present invention will be further clarified by the following detailed description of some embodiments, presented by way of nonlimiting example of the present invention, with reference to the attached figures, in which:
figure 1 shows a perspective view of a composite product obtainable by the process according to the present invention;
figure 2 shows in schematic form and not in scale a partial section of a composite product obtainable by the process according to the present invention;
figures 3a - 3c show in purely schematic way some exemplary steps of a process according to the present invention.

### Detailed description of some embodiments of the invention

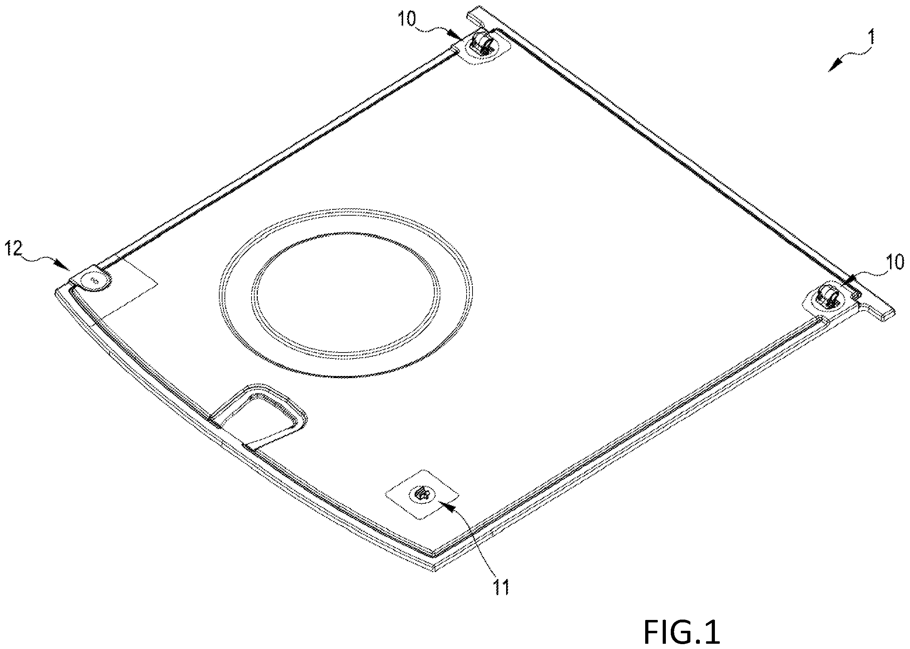

In figure 1 with the reference number 1 a finished composite product obtainable with the process according the present invention is shown. Exemplarily, the shown composite product 1 is a loading support of a car trunk.

Exemplarily the composite product 1 is of the sandwich panel type.

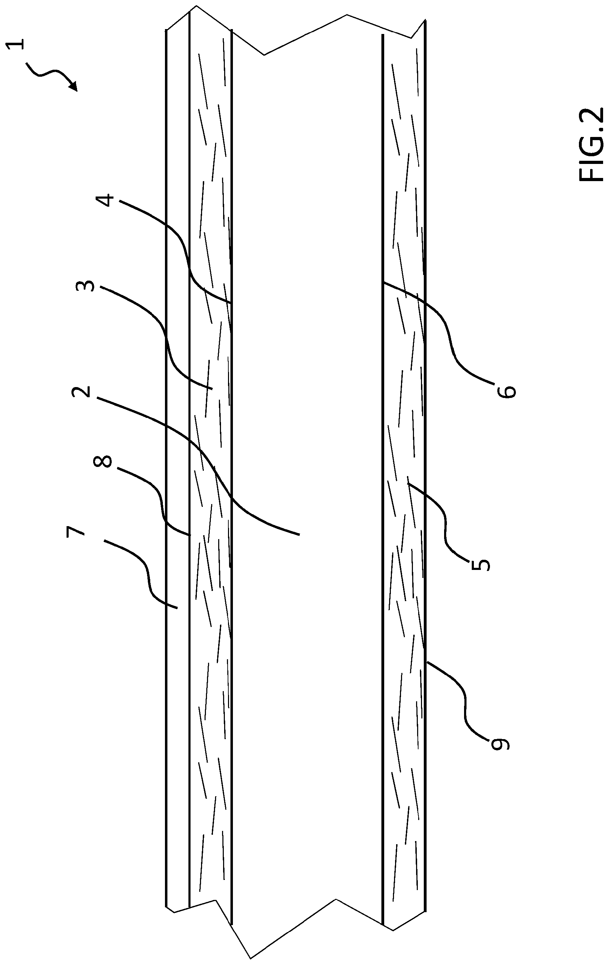

As schematically shown in figure 2, the composite product 1 comprises a core 2, a first layer 3 at a first face 4 of the core 2, a second layer 5 at a second face 6 of the core opposite the first face 4 and a polymer-based film 7 (for example made of polystyrene or polyamide) applied to an outer face 8 of the first layer 3 on opposite side to the first face 4 of the core 2. Optionally, not shown, a further polymer-based film (preferably equal to the film 7) is applied to an outer face 9 of the second layer 5 on opposite side to the second face 6 of the core according to the modalities described herein for the film 7 and simultaneously to the film 7.

The core 2 and the layers 3 and 5 have laminar development. The first and the second layers 3, 5 are constituted (not shown) of a respective fiberglass sheet impregnated with a solid polyurethane material. Exemplarily the thickness of the undeformed layers 3 and 5 is equal to about 0.3-0.4 mm, the thickness of the undeformed core 2 is equal to about 12-20 mm and the thickness of the film 7 is 60 µm. In figure 2 the thicknesses of the first and second layers 3, 5 and of the film 7 have been deliberately exaggerated to improve visibility.

Preferably the core 2 consists of a honeycomb cardboard in which the cells (not shown) are formed by walls with development substantially perpendicular to the first and second face of the core. Although not shown, the solid polyurethane material typically also partially invades the inner space of the cells near to the first and second face 4, 5, to firmly fix the first and second layer 3 and 5 to the core 2.

The composite product 1 can also (but not necessarily) comprise, as exemplary shown at the lower face visible in figure 1, some inserts 10, 11 and 12, rigid and in single piece, typically made of polymeric material.

Exemplarily the inserts 10 are needed to hook the loading support to a pair of pins integral with the rest of the car (not shown), realizing two hinge couplings to allow the rotation (lifting) of the loading support. Exemplarily the second insert 11 is needed to hook the loading support to the rest of the vehicle with a snap coupling. Exemplarily the third insert 12, comprising a pair of holes, is needed to ensure the correct positioning of the loading support in the hooking position.

The possibly present inserts can be fixed after the molding by means of fixing means (such as screws, rivets, etc.), or by gluing, or co-moulded together with the semi-finished product (in this case each insert comprises - not shown - a portion drowned in the first layer 3 and in the core 2 and encapsulated by the polyurethane material, and a portion protruding from the first layer 3).

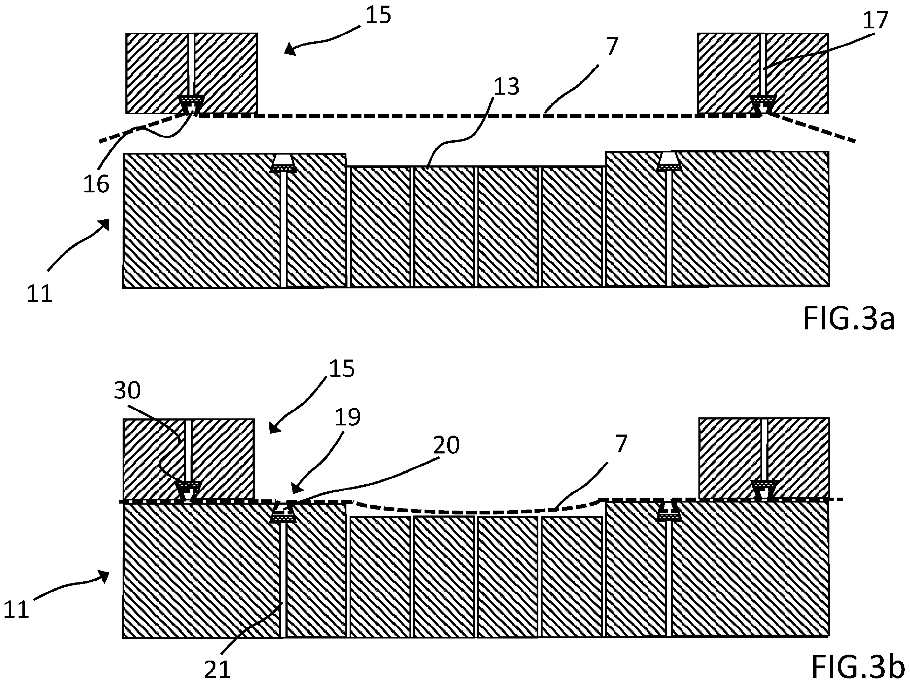

In the following an exemplary production process of a composite product according to the present invention is described, with reference to figures 3a-3c which show in a purely schematic way the sections of the used elements.

The process comprises first producing a semi-finished product (not shown) arranging on the first and second face 4, 6 of the core 2 a respective fiberglass sheet and spraying the fiberglass sheets, until they are completely impregnated, with a liquid mixture of polyol and isocyanate, for example from the Elastoflex^{®} series marketed by BASF^{®} or from the Baypreg^{®} series marketed by Covestro^{®}.

The aforesaid semi-finished product is thus formed by means of a mould.

For this purpose, it is used a mould 10 comprising a first 11 and a second half-mould 12 each having a respective shaping surface 13 (shown in a purely arbitrary way in the figures) which, once the mould is closed, define a cavity 14 in which the semi-finished product is housed during forming.

In figures 3a-3c the dimensions, conformations, positions of the half-moulds, of the frame, of the cavity 14 and of the suction ducts are purely arbitrary and for the sole illustrative purpose of the invention.

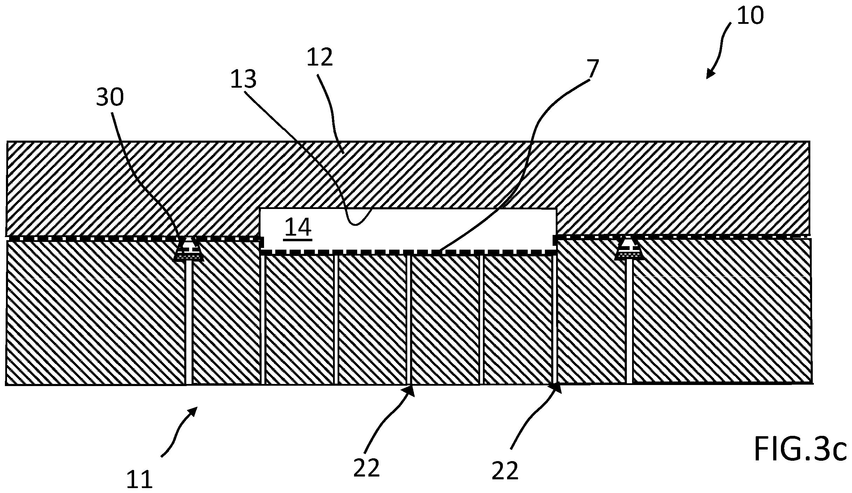

The process provides adhering the film 7 to the shaping surface 13 of the first half-mould (and of the second half-mould in the case of coating on both sides) by applying a depression between the film 7 and the shaping surface 13, as shown in figure 3c. Exemplarily it is first provided applying (e.g. approaching or resting) the film 7 to a frame 15 and applying a depression between film and frame along a continuous perimetral portion of the film 7, to couple the film to the frame and to pre-tension the film (fig 3a). For this purpose, for example, the frame is provided with at least one continuous groove 16 which runs along a closed path positioned externally with respect to the shaping surface 13, the groove being connected to a plurality of ducts 17 for the suction of air (the suction systems are not further described or illustrated since they are for example of known type).

Subsequently (fig. 3b) the frame 15 is approached to the first half-mould 11 until the film contacts the half-mould.

Alternatively, the film 7 can be spread on the first half-mould 11 by means of different catching devices (for example four pliers at the four corners of the film) or even manually.

Subsequently a depression is applied between a perimetral portion 19 of the film which exceeds the shaping surface 13 along the whole perimeter of the shaping surface and the first half-mould (fig. 3b). For this purpose for example the first half-mould is provided with at least one continuous groove 20 which runs along a closed path positioned externally with respect to the shaping surface 13, and internally with respect to the aforesaid groove 16 of the frame 15, the groove 20 being connected to a plurality of ducts 21 for the suction of the air.

Preferably suitable diffuser elements 30 are placed on the bottom of the grooves 16 and 20 to distribute the suction over the entire surface of the bottom.

Finally, a depression is applied between the film 7 and the shaping surface 13 of the first half-mould, preferably keeping the depression between the perimetral portion of film and the first half-mould. For this purpose, for example the first half-mould is provided with a plurality of ducts 22 for the suction of the air.

At this point (or even before applying the depression between the film 7 and the shaping surface 13) the depression between the frame and the film is removed and the frame is removed.

The semi-finished product is thus closed between the two half-moulds pressed against each other (fig. 3c), so that, thanks to the pressure of the two half-moulds, the shaping surfaces of the two half-moulds conform the respective faces of the panel 1.

During the forming the blade system (not shown) of the mould cuts the semi-finished product along the contour line, and exemplarily also along a closed path to form an opening for the application of a handle on the finished loading support (fig 1). Exemplarily the pressure exerted on the two half-moulds is approximately 300 tons, largely due to the cutting action.

Subsequently the semi-finished product is kept in the mould thermostated at a temperature of about 140°C for a given time interval, for example one minute, in order to thermoset the liquid mixture to transform it into the solid polyurethane material and thus make the composite product 1. The mixture which is in contact with the film 7, once hardened to form the polyurethane material, intimately and firmly fixes the film to the panel structure.

## Claims

1. Production process of a composite product (1), the composite product (1) comprising a core (2), at least a first layer (3) at a first face (4) of the core (2), the first layer (3) comprising a sheet impregnated with a solid polyurethane material, and a polymer-based film (7) applied to said first layer (3) at the opposite side with respect to said first face (4) of the core (2),
wherein the process comprises:
- producing a semi-finished product comprising said core (2) and, at the first face (4) of the core (2), said sheet impregnated by a liquid mixture precursor of said solid polyurethane material;
- providing a mould (10) comprising two half-moulds (11, 12) each having a respective shaping surface (13);
- adhering said film (7) to said shaping surface (13) of a first (11) of said two half-moulds by applying a depression between said film (7) and said shaping surface (13);
- forming the semi-finished product by pressing said two half-moulds (11, 12) against each other with said semi-finished product interposed between the two shaping surfaces (13), so that said film (7) comes into contact with the liquid mixture which impregnates said sheet at the first layer (3);
- with the semi-finished product in the mould, thermosetting said liquid mixture to transform it into said polyurethane solid material so that said film (7) firmly adheres to said first layer (3) and thus producing the composite product (1).

2. Process according to claim 1, wherein said composite product (1) comprises a second layer (5) at a second face (6) of the core opposite to the first face (4) of the core (2), the second layer (5) comprising a further sheet impregnated of said polyurethane solid material, and wherein said semi-finished product comprises, at the second face of the core, said further sheet impregnated with said liquid mixture precursor of said polyurethane solid material.

3. Process according to the preceding claim, wherein said composite product (1) comprises a further polymer-based film applied on said second layer (5) at the opposite side with respect to said second face (6) of the core (2),
and wherein the process comprises:
- adhering said further film to said shaping surface (13) of a second (12) of said two half-moulds by applying a depression between said further film and said shaping surface of the second half-mould (12);
- during said forming the semi-finished product, said further film comes into contact with the liquid mixture which impregnates said further sheet;
- during said thermosetting said liquid mixture, said further film firmly adheres to said second layer.

4. Process according to any one of the previous claims, wherein said core and/or said first and/or second layer have substantially laminar development, wherein said sheet is made of glass fiber, carbon fiber, kevlar fiber, or natural fibers, wherein said core comprises a honeycomb cardboard or a solid foam, and wherein said polyurethane material is based on diphenylmethane diisocyanate, MDI, and wherein said liquid mixture is a mixture of polyol and isocyanate.

5. Process according to any one of the previous claims, wherein producing said semi-finished product comprises spraying said sheet with said liquid mixture, wherein said first half-mould comprises a respective body having said shaping surface and a cutting blade system, wherein forming the semi-finished product comprises cutting said semi-finished product at least along a contour line by means of said blade system and wherein thermosetting the liquid mixture comprises keeping the semi-finished product inside the mould at a temperature greater than 120° for a given time interval.

6. Process according to any one of the previous claims, wherein said film (7) has a thickness greater than or equal to 10 µm, and/or less than or equal to 500 µm.

7. Process according to any one of the previous claims, wherein said film (7) contains or it is substantially composed of one or more of the following polymers: polypropylene, PP, polyethylene, PE polyamide, PA, polystyrene, PS, polymethyl methacrylate, PMMA, polycarbonate, PC, acrylonitrile butadiene styrene, ABS.

8. Process according to any one of the previous claims, wherein at least one face of said film in contact with said outer face of the first layer is made of polyamide or polystyrene, PS, or polymethyl methacrylate, PMMA, or polycarbonate, PC, or acrylonitrile butadiene styrene, ABS.

9. Process according to any one of the previous claims, wherein said film (7) contains an anti-UV filler and/or a pigment.

10. Process according to any one of the previous claims, wherein adhering said polymeric film (7) to said shaping surface (13) comprises:
- applying said film (7) on said first half-mould, wherein said film (7) has a continuous perimetral portion that exceeds said shaping surface along a whole perimeter of the shaping surface;
- applying a depression between said perimetral portion of said film and said first half-mould along a continuous line surrounding the respective shaping surface;
- after the previous step, applying said depression between said film and said shaping surface,
and wherein said depression is greater than or equal to 0.1 bar and/or less than or equal to 0.9 bar.

11. Process according to claim 10, wherein applying said film (7) on said first half-mould (11) comprises:
- applying said film (7) to a frame (15) and applying a depression between film (7) and frame (15) along a continuous perimetral portion (19) of said film (7), to couple the film (7) to the frame (15);
- subsequently applying said film (7) on said first half-mould (11) by approaching the frame (15) to the first half-mould (11);
- subsequently applying said depression between said perimetral portion (19) of said film (7) and said first half-mould (11);
- subsequently removing said depression between film (7) and frame (15), to be able to remove said frame (15) from said first half-mould (11).

12. Process according to any one of the previous claims, wherein said sheet is made of fiberglass, wherein said core comprises a honeycomb cardboard having cells with perpendicular development to said first face (4) of the core (2), wherein said polyurethane material is based on 4,4'-diphenylmethane diisocyanate 4, 4'-MDI, and wherein said liquid mixture is a mixture of polyol and 4,4'-MDI.

13. Process according to any one of the previous claims, wherein said film (7) has a thickness greater than or equal to 30 µm and less than or equal to 150 µm.

## Patentansprüche

1. Verfahren zur Herstellung eines Verbundwerkstoffes (1), wobei der Verbundwerkstoff (1) einen Kern (2), mindestens eine erste Schicht (3) an einer ersten Fläche (4) des Kerns (2), wobei die erste Schicht (3) eine mit einem festen Polyurethanmaterial imprägnierte Platte umfasst, und eine Folie (7) auf Polymerbasis umfasst, die an die erste Schicht (3) auf der gegenüberliegenden Seite in Bezug auf die erste Fläche (4) des Kerns (2) aufgebracht wird,
wobei das Verfahren Folgendes umfasst:
- Herstellen eines Halbzeugs, das den Kern (2) und an der ersten Fläche (4) des Kerns (2) die Platte umfasst, die mit einem Vorläufer der flüssigen Mischung des festen Polyurethanmaterials imprägniert ist;
- Bereitstellen einer Form (10), die zwei Halbformen (11, 12) umfasst, die jeweils eine jeweilige Formgebungsfläche (13) aufweisen;
- Anhaften der Folie (7) an die Formgebungsfläche (13) einer ersten (11) der zwei Halbformen durch Aufbringen eines Unterdrucks zwischen der Folie (7) und der Formgebungsfläche (13);
- Formen des Halbzeugs durch Pressen der beiden Halbformen (11, 12) gegeneinander, wobei das Halbzeug zwischen den beiden Formgebungsflächen (13) angeordnet ist, so dass die Folie (7) mit der flüssigen Mischung in Kontakt kommt, die die Platte an der ersten Schicht (3) imprägniert;
- mit dem Halbzeug in der Form, Wärmehärten der flüssigen Mischung, um sie in das feste Polyurethanmaterial umzuwandeln, so dass die Folie (7) fest an der ersten Schicht (3) haftet und so den Verbundwerkstoff (1) erzeugt.

2. Verfahren nach Anspruch 1, wobei der Verbundwerkstoff (1) eine zweite Schicht (5) an einer zweiten Fläche (6) des Kerns gegenüber der ersten Fläche (4) des Kerns (2) umfasst, wobei die zweite Schicht (5) eine weitere Platte umfasst, die mit dem festen Polyurethanmaterial imprägniert ist, und wobei das Halbzeug an der zweiten Fläche des Kerns die weitere Platte umfasst, die mit dem Vorläufer der flüssigen Mischung des festen Polyurethanmaterials imprägniert ist.

3. Verfahren nach dem vorhergehenden Anspruch, wobei der Verbundwerkstoff (1) eine weitere Folie auf Polymerbasis umfasst, die auf der zweiten Schicht (5) an der gegenüberliegenden Seite in Bezug auf die zweite Fläche (6) des Kerns (2) aufgebracht wird,
und wobei das Verfahren Folgendes umfasst:
- Anhaften der weiteren Folie an die Formgebungsfläche (13) einer zweiten (12) der zwei Halbformen durch Aufbringen eines Unterdrucks zwischen der weiteren Folie und der Formgebungsfläche der zweiten Halbform (12);
- während des Formens des Halbzeugs kommt die weitere Folie mit der flüssigen Mischung in Kontakt, die die weitere Platte imprägniert;
- während des Wärmehärtens der flüssigen Mischung haftet die weitere Folie fest an der zweiten Schicht.

4. Verfahren nach einem der vorhergehenden Ansprüche, wobei der Kern und/oder die erste und/oder zweite Schicht eine im Wesentlichen laminare Entwicklung aufweisen, wobei die Platte aus Glasfaser, Kohlenstofffaser, Kevlarfaser oder Naturfasern hergestellt ist, wobei der Kern eine Wabenkarton oder einen festen Schaumstoff umfasst, und wobei das Polyurethanmaterial auf Diphenylmethandiisocyanat, MDI, basiert, und wobei die flüssige Mischung eine Mischung aus Polyol und Isocyanat ist.

5. Verfahren nach einem der vorhergehenden Ansprüche, wobei das Herstellen des Halbzeugs das Besprühen der Platte mit der flüssigen Mischung umfasst, wobei die erste Halbform einen jeweiligen Körper mit der Formgebungsfläche und ein Schneidklingensystem umfasst, wobei das Formen des Halbzeugs das Schneiden des Halbzeugs wenigstens entlang einer Konturlinie mittels des Klingensystems umfasst und wobei das Wärmehärten der flüssigen Mischung das Halten des Halbzeugs in der Form bei einer Temperatur von mehr als 120° für ein gegebenes Zeitintervall umfasst.

6. Verfahren nach einem der vorhergehenden Ansprüche, wobei die Folie (7) eine Dicke höher als oder gleich 10 µm und/oder weniger als oder gleich 500 µm aufweist.

7. Verfahren nach einem der vorhergehenden Ansprüche, wobei die Folie (7) im Wesentlichen eines oder mehrere der folgenden Polymere enthält oder daraus besteht: Polypropylen, PP, Polyethylen, PE, Polyamid, PA, Polystyrol, PS, Polymethylmethacrylat, PMMA, Polycarbonat, PC, Acrylnitril-Butadien-Styrol, ABS.

8. Verfahren nach einem der vorhergehenden Ansprüche, wobei mindestens eine Fläche der Folie, die mit der Außenseite der ersten Schicht in Kontakt steht, aus Polyamid oder Polystyrol, PS, oder Polymethylmethacrylat, PMMA, oder Polycarbonat, PC, oder Acrylnitrilbutadienstyrol, ABS, hergestellt ist.

9. Verfahren nach einem der vorhergehenden Ansprüche, wobei die Folie (7) einen Anti-UV-Füllstoff und/oder ein Pigment enthält.

10. Verfahren nach einem der vorhergehenden Ansprüche, wobei das Anhaften des Polymerfilms (7) an der Formgebungsfläche (13) Folgendes umfasst:
- Aufbringen der Folie (7) auf die erste Halbform, wobei die Folie (7) einen kontinuierlichen Umfangsabschnitt aufweist, der die Formgebungsfläche entlang eines gesamten Umfangs der Formgebungsfläche übersteigt;
- Aufbringen eines Unterdrucks zwischen dem Umfangsabschnitt der Folie und der ersten Halbform entlang einer kontinuierlichen Linie, die die jeweilige Formgebungsfläche umgibt;
- nach dem vorherigen Schritt Aufbringen des Unterdrucks zwischen der Folie und der Formgebungsfläche,
und wobei der Unterdruck größer als oder gleich 0,1 bar und/oder weniger als oder gleich 0,9 bar ist.

11. Verfahren nach Anspruch 10, wobei das Aufbringen der Folie (7) auf die erste Halbform (11) Folgendes umfasst:
- Aufbringen der Folie (7) auf einen Rahmen (15) und Aufbringen eines Unterdrucks zwischen Folie (7) und Rahmen (15) entlang eines kontinuierlichen Umfangsabschnitts (19) der Folie (7), um die Folie (7) an den Rahmen (15) zu koppeln;
- anschließendes Aufbringen der Folie (7) auf die erste Halbform (11) durch Annähern des Rahmens (15) an die erste Halbform (11);
- anschließendes Aufbringen des Unterdrucks zwischen dem Umfangsabschnitt (19) der Folie (7) und der ersten Halbform (11);
- anschließendes Entfernen des Unterdrucks zwischen Folie (7) und Rahmen (15), um den Rahmen (15) von der ersten Halbform (11) entfernen zu können.

12. Verfahren nach einem der vorhergehenden Ansprüche, wobei die Platte aus Glasfaser hergestellt ist, wobei der Kern einen Wabenkarton mit Zellen mit senkrechter Entwicklung zu der ersten Fläche (4) des Kerns (2) umfasst, wobei das Polyurethanmaterial auf 4,4'-Diphenylmethandiisocyanat, 4,4'-MDI, basiert und
wobei die flüssige Mischung eine Mischung aus Polyol und 4,4'-MDI ist.

13. Verfahren nach einem der vorhergehenden Ansprüche, wobei die Folie (7) eine Dicke höher als oder gleich 30 µm und weniger als oder gleich 150 µm aufweist.

## Revendications

1. Procédé de production d'un produit composite (1), le produit composite (1) comprenant une âme (2), au moins une première couche (3) en correspondance d'une première face (4) de l'âme (2), la première couche (3) comprenant une feuille imprégnée d'un matériau de polyuréthane solide, et un film à base de polymère (7) appliqué à ladite première couche (3) en correspondance du côté opposé par rapport à ladite première face (4) de l'âme (2),
dans lequel le procédé comprend :
- produire un produit semi-fini comprenant ladite âme (2) et, en correspondance de la première face (4) de l'âme (2), ladite feuille imprégnée par un mélange liquide précurseur dudit matériau de polyuréthane solide ;
- prévoir un moule (10) comprenant deux demi-moules (11, 12) comportant chacun une surface de mise en forme respective (13) ;
- faire adhérer ledit film (7) sur ladite surface de mise en forme (13) d'un premier (11) desdits deux demi-moules en appliquant une dépression entre ledit film (7) et ladite surface de mise en forme (13) ;
- former le produit semi-fini en pressant lesdits deux demi-moules (11, 12) l'un contre l'autre avec ledit produit semi-fini interposé entre les deux surfaces de mise en forme (13), de sorte que ledit film (7) entre en contact avec le mélange liquide qui imprègne ladite feuille en correspondance de la première couche (3) ;
- avec le produit semi-fini dans le moule, thermodurcir ledit mélange liquide pour le transformer en ledit matériau solide de polyuréthane de sorte que ledit film (7) adhère fermement à ladite première couche (3) et produire ainsi le produit composite (1).

2. Procédé selon la revendication 1, dans lequel ledit produit composite (1) comprend une deuxième couche (5) en correspondance d'une deuxième face (6) de l'âme opposée à la première face (4) de l'âme (2), la deuxième couche (5) comprenant une feuille supplémentaire imprégnée dudit matériau solide de polyuréthane, et dans lequel ledit produit semi-fini comprend, en correspondance de la deuxième face de l'âme, ladite feuille supplémentaire imprégnée dudit mélange liquide précurseur dudit matériau solide de polyuréthane.

3. Procédé selon la revendication précédente, dans lequel ledit produit composite (1) comprend un film supplémentaire à base de polymère appliqué sur ladite deuxième couche (5) du côté opposé par rapport à ladite deuxième face (6) de l'âme (2),
et dans lequel le procédé comprend :
- faire adhérer ledit film supplémentaire sur ladite surface de mise en forme (13) d'un deuxième (12) desdits deux demi-moules en appliquant une dépression entre ledit film supplémentaire et ladite surface de mise en forme du deuxième demi-moule (12) ;
- pendant ledit formage du produit semi-fini, ladite feuille supplémentaire entre en contact avec le mélange liquide qui imprègne ladite feuille supplémentaire ;
- pendant ledit thermodurcissement dudit mélange liquide, ladite feuille supplémentaire adhère fermement à ladite deuxième couche.

4. Procédé selon l'une quelconque des revendications précédentes, dans lequel ladite âme et/ou ladite première et/ou deuxième couche ont un développement essentiellement laminaire, dans lequel ladite feuille est constituée de fibre de verre, de fibre de carbone, de fibre de kevlar, ou de fibres naturelles, dans lequel ladite âme comprend un carton en nid d'abeille ou une mousse solide, et dans lequel ledit matériau de polyuréthane est à base de diphénylméthane diisocyanate, MDI, et dans lequel ledit mélange liquide est un mélange de polyol et d'isocyanate.

5. Procédé selon l'une quelconque des revendications précédentes, dans lequel la production dudit produit semi-fini comprend la pulvérisation de ladite feuille avec ledit mélange liquide, dans lequel ledit premier demi-moule comprend un corps respectif comportant ladite surface de formage et un système de lame de coupe, dans lequel le formage du produit semi-fini comprend la coupe dudit produit semi-fini au moins le long d'une ligne de contour au moyen dudit système de lame et dans lequel le thermodurcissement du mélange liquide comprend le maintien du produit semi-fini à l'intérieur du moule à une température supérieure à 120° pendant un intervalle de temps donné.

6. Procédé selon l'une quelconque des revendications précédentes, dans lequel ledit film (7) comporte une épaisseur supérieure ou égale à 10 µm, et/ou inférieure ou égale à 500 µm.

7. Procédé selon l'une quelconque des revendications précédentes, dans lequel ledit film (7) contient ou est essentiellement composé d'un ou plusieurs des polymères suivants : polypropylène, PP, polyéthylène, PE, polyamide, PA, polystyrène, PS, polyméthacrylate de méthyle, PMMA, polycarbonate, PC, acrylonitrile butadiène styrène, ABS.

8. Procédé selon l'une quelconque des revendications précédentes, dans lequel au moins une face dudit film en contact avec ladite face extérieure de la première couche est en polyamide ou en polystyrène, PS, ou en polyméthacrylate de méthyle, PMMA, ou en polycarbonate, PC, ou en acrylonitrile butadiène styrène, ABS.

9. Procédé selon l'une quelconque des revendications précédentes, dans lequel ledit film (7) contient une charge anti-UV et/ou un pigment.

10. Procédé selon l'une quelconque des revendications précédentes, dans lequel l'adhésion dudit film polymérique (7) à ladite surface de mise en forme (13) comprend :
- appliquer ledit film (7) sur ledit premier demi-moule, dans lequel ledit film (7) comporte une partie périphérique continue qui dépasse ladite surface de mise en forme sur tout le périmètre de la surface de mise en forme ;
- appliquer une dépression entre ladite partie périphérique dudit film et ledit premier demi-moule le long d'une ligne continue entourant la surface de mise en forme respective ;
- après l'étape précédente, appliquer ladite dépression entre ledit film et ladite surface de mise en forme,
et dans lequel ladite dépression est supérieure ou égale à 0,1 bar et/ou inférieure ou égale à 0,9 bar.

11. Procédé selon la revendication 10, dans lequel l'application dudit film (7) sur ledit premier demi-moule (11) comprend :
- appliquer ledit film (7) sur un cadre (15) et l'application d'une dépression entre le film (7) et le cadre (15) le long d'une partie périphérique continue (19) dudit film (7), pour coupler le film (7) au cadre (15) ;
- appliquer ensuite ledit film (7) sur ledit premier demi-moule (11) en approchant le cadre (15) du premier demi-moule (11) ;
- appliquer ensuite ladite dépression entre ladite partie périphérique (19) dudit film (7) et ledit premier demi-moule (11) ;
- supprimer ensuite ladite dépression entre le film (7) et le cadre (15), afin de pouvoir retirer ledit cadre (15) dudit premier demi-moule (11).

12. Procédé selon l'une quelconque des revendications précédentes, dans lequel ladite feuille est constituée de fibre de verre, dans lequel ladite âme comprend un carton en nid d'abeille comportant des cellules à développement perpendiculaire sur ladite première face (4) de l'âme (2), dans lequel ledit matériau de polyuréthane est à base de 4,4'-diphénylméthane diisocyanate, 4,4'-MDI, et
dans lequel ledit mélange liquide est un mélange de polyol et de 4,4'-MDI.

13. Procédé selon l'une quelconque des revendications précédentes, dans lequel ledit film (7) a une épaisseur supérieure ou égale à 30 µm et inférieure ou égale à 150 µm.
